# EUROPÄISCHE PATENTSCHRIFT

(11) **EP 2 953 829 B1**
(45) Veröffentlichungstag und Bekanntmachung des Hinweises auf die Patenterteilung: **23.11.2016**
(21) Anmeldenummer: 14702519.1
(22) Anmeldetag: 28.01.2014
(51) Int. Cl.: B61H 13/00

(54) **ANSCHLUSSEINRICHTUNG**
CONNECTOR DEVICE
DISPOSITIF DE RACCORDEMENT

(30) Priorität: 06.02.2013 AT 500902013
(43) Veröffentlichungstag der Anmeldung: 16.12.2015
(73) Patentinhaber: Siemens AG Österreich, 1210 Wien (AT)
(72) Erfinder: HAUBENHOFER, Martin, A-8045 Graz (AT); SCHMID, Johann Peter, A-8042 Graz (AT); STEIRER, Hanspeter, A-8580 Köflach (AT)
(74) Vertreter: Maier, Daniel Oliver
(86) Internationale Anmeldenummer: PCT/EP2014/051651
(87) Internationale Veröffentlichungsnummer: WO 2014/122047

(56) Entgegenhaltungen:
- DE-A1- 19 853 656
- DE-A1- 19 905 848
- DE-U1- 20 309 134
- DE-U1-202011 052 278
- FR-A1- 2 790 724

## Beschreibung

### Technisches Gebiet

Die Erfindung betrifft eine Anschlußeinrichtung für einen Feststellbremsseilzug an einem Drehgestell eines Schienenfahrzeugs.

### Stand der Technik

Feststellbremsen von Schienenfahrzeugen, insbesondere Passagierschienenfahrzeugen werden gebräuchlicherweise von einer Betätigungseinrichtung im Wageninneren aus bedient. Diese Betätigungseinrichtung ist häufig als Handrad ausgeführt und wirkt über Kraftübertragungseinrichtungen (z.B. einen Seilzug) auf die Bremseinrichtung. Moderne Schienenfahrzeuge sind mit Scheibenbremsen ausgestattet wobei die Kraftübertragungseinrichtungen der Handbremsbetätigung parallel zu der pneumatischen Betätigung der Betriebsbremse auf die Bremsbelege wirken. Die Haltekraft der Feststellbremse ist in spezifischen Normanforderungen definiert, typischerweise muß die Feststellbremse einen Wagen mit maximal zulässiger Masse auf einem Gefälle von 35% halten können. Fahrzeuge, die für den Betrieb sowohl auf Normalspurals auch Breitspurgeleisen vorgesehen sind, müssen umfangreiche Mittel für die Austauschbarkeit der Drehgestelle aufweisen. Dabei ist auf eine rasche Austauschbarkeit besonderer Wert zu legen, da an den Austauscheinrichtungen die Mittel und Werkzeuge eines Hersteller- oder Reparaturwerks nicht zur Verfügung stehen. Die Anschlüsse und Leitungen zwischen einem Wagenkasten und einem Drehgestell müssen daher dementsprechend leicht zu trennen bzw. zu verbinden sein. Dies ist bei elektrischen und pneumatischen Anschlüssen ohne besondere Schwierigkeiten zu realisieren, die Übertragung der mechanischen Betätigungskraft für die Feststellbremse ist wesentlich aufwendiger. Gemäß dem Stand der Technik werden dabei die Mittel zur Übertragung der mechanischen Betätigungskraft (Seilzüge, Bowdenzüge, Flexballzüge) fahrwerkseitig abgeschraubt und ausgehängt. Zum Lösen und Wiederherstellen dieser Verbindung sind Sonderwerkzeuge erforderlich und der Löse- bzw. Wiederverbindungsvorgang ist sehr zeitaufwendig.
Aus der Gebrauchsmusterschrift DE 203 09 134 U1 ist eine Bremsvorrichtung für ein Fahrrad bekannt, welche eine hohe Empfindlichkeit aufweist und die vordere und hintere Bremse synchron betätigt. Dazu ist eine Synchron-Gleichgewichts-Bremsvorrichtung vorgesehen, umfassend ein Gehäuse und ein Gegengewichtsstück mittels welchem die Bremsseile der vorderen und der hinteren Bremse synchron betätigbar sind.

### Darstellung der Erfindung

Der Erfindung liegt daher die Aufgabe zugrunde, eine Anschlußeinrichtung für den Anschluß eines Feststellbremsseilzuges an einem Drehgestell eines Schienenfahrzeugs anzugeben, welche die Trennung und Wiederverbindung des Feststellbremsseilzuges bei einem Wechsel des Drehgestells schnell und ohne Sonderwerkzeuge ermöglicht und dabei die Verbindungsstelle vor Einflüssen der Umgebung schützt.

Die Aufgabe wird durch eine Anschlußeinrichtung mit den Merkmalen des Anspruchs 1 und einem Schienenfahrzeug mit den Merkmalen des Anspruchs 8 gelöst. Vorteilhafte Ausgestaltungen sind Gegenstand untergeordneter Ansprüche.

Dem Grundgedanken der Erfindung nach wird eine Anschlußeinrichtung für die Verbindung eines ersten Seilzugs mit einem zweiten Seilzug im Bereich eines Drehgestells eines Schienenfahrzeugs aufgebaut, wobei drehgestellseitig ein Anschlußkasten mit einem offenbaren Deckel angeordnet ist, und wobei ein erstes Seil des ersten Seilzugs im Inneren des Anschlußkastens mit einem ersten Verbindungselement fest verbunden ist, und ein zweites Seil des zweiten Seilzugs im Inneren des Anschlußkastens mit einem zweiten Verbindungselement fest verbunden ist, und wobei das erste Verbindungselement und das zweite Verbindungselement mittels einer formschlüssigen Verschlußeinrichtung lösbar verbunden sind, und der Deckel in geschlossener Position ein mit einem Mantel des ersten Seilzugs verbundenes Anschlußstück formschlüssig umfasst.

Dadurch ist der Vorteil erzielbar, zwei Seilzüge so miteinander verbinden zu können, dass die von einem Seilzug eingebrachte Kraft auf den weiteren Seilzug übermittelt wird und die Seilzüge dabei einfach voneinander lösbar und wiederverbindbar sind. Insbesondere ist es vorteilhaft,

Erfindungsgemäß ist das Seil des ersten Seilzugs, welcher die zum Betätigen der Feststellbremse erforderliche mechanische Zug- bzw. Druckkraft übermittelt mit einem Verbindungselement ausgestattet. Das Seil eines zweiten Seilzuges, welches vorgesehen ist um die vom ersten Seilzug übermittelte Kraft aufzunehmen und an die Bremseinrichtung des Drehgestells weiterzuleiten ist ebenfalls mit einem Verbindungselement ausgestattet. Diese beiden Verbindungselemente sind so gestaltet, dass sie mittels einer Verschlußeinrichtung lösbar miteinander verbindbar sind, sodass die zu übertragende mechanische Kraft über die Verbindungselemente in das jeweils korrespondierende Seil geleitet wird.

Eine Ausführungsform der Erfindung sieht vor einen oder beide Seilzüge mit zwei parallelen Seilen auszuführen. Dadurch ist der Vorteil erzielbar, die Bremseinrichtungen beider Achsen eines zweiachsigen Drehgestells jeweils direkt mit jeweils einem Seilzug mit Kraft zu beaufschlagen, wodurch aufwendige Mechanismen zur Kraftaufteilung im Drehgestell entfallen können. Wird der Seilzug zwischen einer wagenkastenseitigen Betätigungseinrichtung (typischerweise ein Handrad) und der Anschlußeinrichtung mit zwei parallel Seilen ausgeführt, so kann auch bei Versagens eines der Seile eine Bremsung aufgeführt werden.

Erfindungsgemäß ist der Mantel des ersten Seilzugs von der Betätigungseinrichtung zu der Anschlußeinrichtung mit einem Anschlußstück auszustatten. Dieses Anschlußstück ist fest mit dem Mantel zu verbinden, es übermittelt die Gegenkraft zu der im Seil des ersten Seilzugs übermittelten Kraft auf die Anschlußeinrichtung.

Die Anschlußeinrichtung ist aus einem Anschlußkasten gebildet, welcher vorteilhafterweise an festen Bauteilen des Drehgestells angeordnet und mit diesen verbunden ist. Dieser Anschlußkasten ist mit einem offenbaren Deckel auszustatten, um an die in seinem Inneren befindlichen Verbindungselemente und das Verschlußelement gelangen zu können. Der zweite, zu den Bremseinrichtungen führende Seilzug ist drehgestellseitig montiert und verbleibt auch bei einem Wechsel des Drehgestells an diesem befestigt, ebenso der Anschlußkasten.

Die Verbindung der beiden Verbindungselemente erfolgt im Inneren des Anschlußkastens mittels eines Verschlußelements. Dieses Verschlußelement ist vorteilhafterweise als Bolzen ausgebildet, welche in Eingriff mit beiden Verbindungselementen gebracht werden kann und diese solcherart formschlüssig und lösbar miteinander verbindet. Solcherart ist die Kraftübertragung zwischen den beiden Seilzügen sichergestellt.
Zur Verhinderung eines unbeabsichtigten Lösens dieser Verbindung ist das Verschlußelement vorzugsweise als Bolzen mit einer Bajonettfixierung ausgeführt. Dabei ist vor dem Herausziehen des Bolzens in Längsrichtung eine Drehung des Bolzens erforderlich, wodurch ein unbeabsichtigtes Lösen verhindert wird. Zu weiteren Steigerung der Sicherheit gegen unbeabsichtigtes Lösen kann das Verschlußelement mit weiteren Sicherungseinrichtungen ausgestattet werden.

Zur Einleitung der im ersten Seilzug geführten Zugkraft ist eine mechanische Abstützung des Anschlußstücks erforderlich, wodurch die Gegenkraft in dem ersten Seilzug auch in den Anschlußkasten geleitet wird. Dieses Anschlußstück ist erfindungsgemäß so gestaltet, dass in geschlossener Position des Deckels von diesem Deckel festgehalten wird. Dadurch ist der Vorteil erzielbar, das Anschlußstück (und solcherart den ersten Seilzug) werkzeuglos abbauen zu können.
Der zweite Seilzug weist ebenfalls ein mit seinem Mantel verbundenes Anschlußstück auf, dieses kann jedoch auf konventionelle Art (z.B. mittels Schraubverbindung) mit dem Anschlußkasten verbunden sein, da diese Verbindungsstelle bei einem Wechsel des Drehgestells nicht geöffnet werden muß.

In weiterer Fortbildung der Erfindung ist es empfehlenswert die Seilzüge als sogenannte Flexballzüge auszuführen. Diese Art von Seilzügen ermöglicht aufgrund ihrer Ausführungsform eine reibungsärmere Kraftübertragung und erlaubt auch die Übertragung von Druckkräften. Die Übertragung von Druckkräften kann erforderlich sein, da gebräuchliche Bremseinrichtungen teilweise zu geringe Rückstellkräfte aufweisen. Solcherart ist der Vorteil erzielbar, mit der Betätigungseinrichtung (Handrad im Wageninneren) ein vollständiges Öffnen der Bremse gewährleisten zu können, wodurch der Verschleiß der Bremsscheiben und Bremsbeläge reduziert wird.

Gegenständliche Erfindung eignet sich insbesondere für den Einsatz an Schienenfahrzeugen, welche für den grenzüberschreitenden Verkehr zwischen Bahnen mit europäischer Normalspur und russischer Breitspur vorgesehen sind. Mit der hier beschriebenen Lösung kann ein sehr schnelles und werkzeugloses Trennen und Wiederverbinden des Feststellbremsanschlusses eines Drehgestells durchgeführt werden. Aufgrund der Anordnung aller wesentlichen Bauteile in einem Anschlußkasten sind die Verbindungsbauteile (Verbindungselemente, Verschlußelement) vor schädlichen Einflüssen wie Eisansatz und Steinschlag geschützt. Durch geeignete Ausführung dieses Anschlußkastens und des Deckels kann auch eine wasserdichte Umgebung für die Verbindungsbauteile geschaffen werden.

### Kurzbeschreibung der Zeichnungen

Es zeigen beispielhaft:
**Fig.1** Eine Anschlußeinrichtung.
**Fig.2** Anschlußeinrichtung geschlossen.
**Fig.3** Anschlußeinrichtung entriegelt.
**Fig.4** Anschlußeinrichtung geöffnet.
**Fig.5** Anschlußeinrichtung entsichert
**Fig.6** Anschlußeinrichtung Verschlußeinrichtung entfernt.
**Fig.7** Anschlußeinrichtung getrennt.

### Ausführung der Erfindung

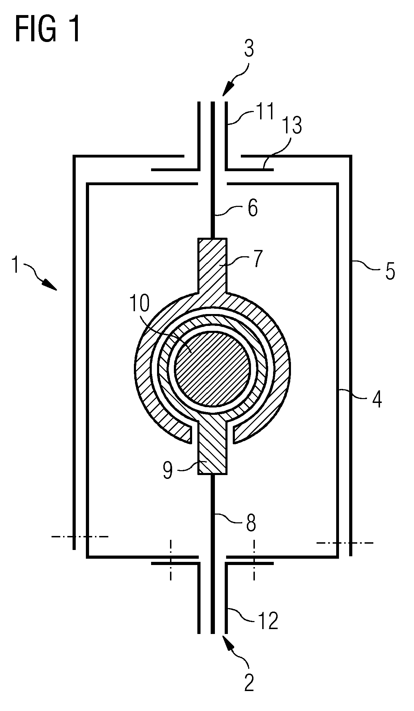

**Fig.1** zeigt beispielhaft und schematisch eine Anschlußeinrichtung. Es ist eine Anschlußeinrichtung 1 in stark abstrahierter, geschnittener Form dargestellt. Diese Anschlußeinrichtung 1 umfasst einen Anschlußkasten 4 mit einem Deckel 5. Der Deckel 5 ist beispielhaft als Klappe mit einer Drehachse ausgeführt, diese Drehachse ist im unteren Bereich des Anschlußkastens 4 angeordnet. Ein erster Seilzug 3, welcher von einer in Fig.1 nicht gezeigten Betätigungseinrichtung zu der Anschlußeinrichtung 1 führt ist im oberen Bereich der Anschlußeinrichtung 1 gezeigt. Dieser erste Seilzug 3 umfasst ein erstes Seil 6 und einen dieses erste Seil 6 umgebenden ersten Mantel 11. Das Ende des ersten Seils 6 ist mit einem ersten Verbindungselement 7 verbunden. Ein zweiter Seilzug 2, welcher zu einer in Fig.1 nicht dargestellten Bremseinrichtung führt, ist im unteren Bereich der Anschlußeinrichtung 1 gezeigt. Dieser zweite Seilzug 2 umfasst ein zweites Seil 8 und einen dieses zweite Seil 8 umgebenden zweiten Mantel 12. Das Ende des zweiten Seils 8 ist mit einem zweiten Verbindungselement 9 verbunden. Die Verbindungselemente 7, 9 sind so ausgeführt, dass sie untereinander eine formschlüssige lösbare Verbindung eingehen können. Das in Fig.1 gezeigte prinzipielle Funktionsprinzip der Erfindung stellt dazu zwei ineinanderpassende Kreisringe dar welche mit einem Verschlußelement 10 vor unbeabsichtigtem Lösen geschützt sind. Das Verschlußelement 10 ist bolzenförmig ausgebildet und weist, in Fig. 1 nicht dargestellte Ausformungen auf, welche den Formschluß der Verbindungselemente 7, 9 vor unbeabsichtigtem Lösen bewahren. Der Mantel 12 des zweiten Seilzuges 2 ist fest mit dem Anschlußkasten 4 verbunden. Der Mantel 11 des ersten Seilzugs 3 ist mit einem Anschlußstück 13 fest verbunden. Dieses Anschlußstück 13 ist bei geschlossenem Deckel 5 in Formschluß mit dem Anschlußkasten 4 und dem Deckel 5. In Fig. 1 ist der Deckel 5 in geschlossener Position dargestellt. Ist der Deckel 5 geöffnet, so ist das Anschlußstück 13 und somit der mit dem Anschlußstück 13 verbundene erste Mantel 11 frei beweglich, wodurch der erste Seilzug 3 nach dem Öffnen des Verschlußelements 10 abgebaut werden kann.

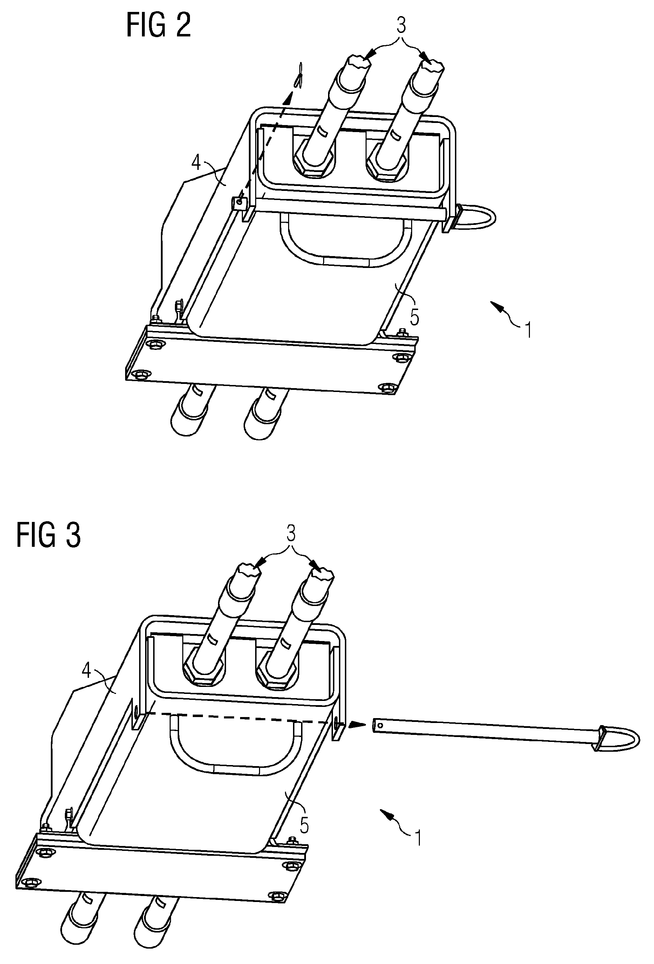

Die Fig.2 bis 7 zeigen die Arbeitsschritte eines Trennvorgangs einer Anschlußeinrichtung. Das Verbinden erfolgt in entgegengesetzter Reihenfolge der Arbeitsschritte.

**Fig.2** zeigt beispielhaft und schematisch eine Anschlußeinrichtung in geschlossenem Zustand. Es ist eine Anschlußeinrichtung 1 in einer konkreten Ausführung gezeigt. Ein Anschlußkasten 4 ist an einer Konsole an einem Drehgestell befestigt, ein Deckel 5 befindet sich in geschlossener Position und ist mit einer Sicherungseinrichtung vor ungewolltem Öffnen gesichert. Diese Sicherungseinrichtung umfasst in gezeigtem Ausführungsbeispiel einen durch zwei Bohrungen des Anschlußkastens 4 geführten Stab und eine Sicherungsfeder. Diese Sicherungsfeder ist in Fig.2 bereits in gelöster Position gezeigt. Ein erster Seilzug 3 führt von einer Betätigungseinrichtung (in Fig.2 nicht dargestellt) in die Anschlußeinrichtung, wobei eine Ausführungsform mit zwei getrennten Seilen dargestellt ist.

**Fig.3** zeigt beispielhaft und schematisch eine Anschlußeinrichtung in entriegeltem Zustand. Es ist die Anschlußeinrichtung 1 aus Fig.2 dargestellt, wobei die Sicherungseinrichtung vollständig entfernt ist.

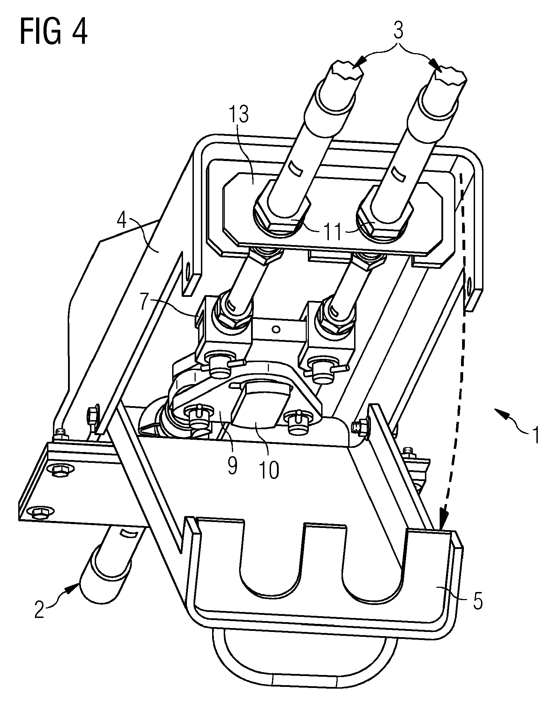

**Fig.4** zeigt beispielhaft und schematisch eine Anschlußeinrichtung in geöffnetem Zustand. Es ist die Anschlußeinrichtung 1 aus Fig.2 dargestellt, wobei der Deckel 5 geöffnet ist. Es sind die im Inneren des Anschlußkastens 4 befindlichen Bauteile erkennbar, wobei der erste Seilzug 3 mit einem ersten Verbindungselement 7 verbunden ist. Der zweite Seilzug 2 dringt von unten in den Anschlußkasten 4 ein und ist in Fig.4 von diesem teilweise verdeckt. Der zweite Seilzug 2 umfasst zwei Seile und zwei Mäntel und ist mit einem zweiten Verbindungselement 9 verbunden. Die beiden Verbindungselemente 7, 9 sind mittels einer Verschlußeinrichtung 10 verbunden. Die Verschlußeinrichtung 10 ist in gezeigtem Ausführungsbeispiel als Bolzen ausgeführt, welcher durch Bohrungen der Verbindungselemente 7, 9 dringt. Die Mäntel 11 des ersten Seilzugs 3 sind mittels eines Anschlußstücks 13 mechanisch abgestützt und übermittelt so die Gegenkraft zu der im Seil des ersten Seilzugs 3 übermittelten Kraft auf die Anschlußeinrichtung 1, bzw. den Anschlußkasten 4. In gezeigtem Ausführungsbeispiel ist das Anschlußstück 13 als plattenförmiges Bauteil ausgebildet, an welchem der Mantel 11 des ersten Seilzugs 3 mittels einer Schraubverbindung befestigt ist.

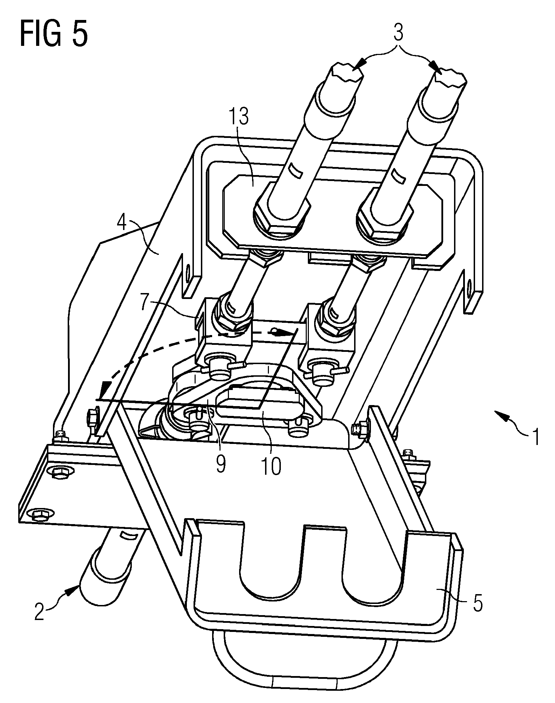

**Fig.5** zeigt beispielhaft und schematisch eine Anschlußeinrichtung in entsichertem Zustand. Es ist die Anschlußeinrichtung 1 aus Fig.2 dargestellt, wobei die Verschlußeinrichtung 10 in entsicherter Position befindlich ist. In gezeigtem Ausführungsbeispiel ist die Verschlußeinrichtung 10 mittels einer Drehung um 90 Grad entsichert.

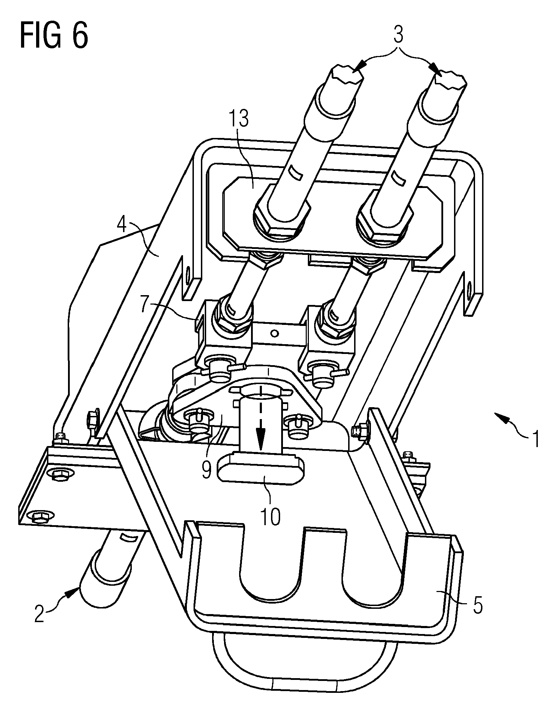

**Fig.6** zeigt beispielhaft und schematisch eine Anschlußeinrichtung mit entferntem Verschlußelement. Es ist die Anschlußeinrichtung 1 aus Fig.2 dargestellt, wobei die Verschlußeinrichtung 10 (Bolzen) entfernt ist.

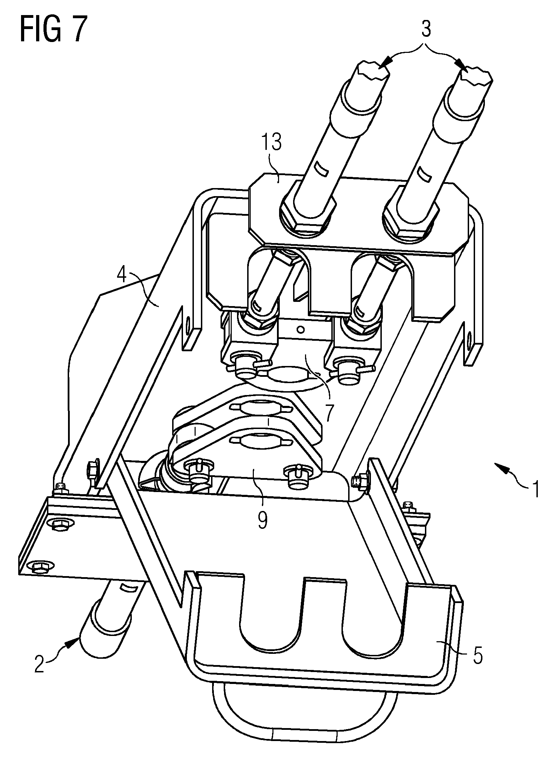

**Fig.7** zeigt beispielhaft und schematisch eine Anschlußeinrichtung in getrenntem Zustand. Es ist die Anschlußeinrichtung 1 aus Fig. 2 dargestellt, wobei die Seilzüge 2, 3 voneinander getrennt sind. Der erste Seilzug 3 verbleibt mit dem Anschlußstück 13 fest verbunden, die Schraubverbindungen des Mantels 11 des ersten Seilzugs 3 können verbunden bleiben, da nach dem Öffnen des Deckels 5 die formschlüssige Verbindung des Anschlußstücks 13 mit dem Anschlußkasten 4 aufgehoben wird.

### Liste der Bezeichnungen

- 1: Anschlußeinrichtung
- 2: Zweiter Seilzug
- 3: Erster Seilzug
- 4: Anschlußkasten
- 5: Deckel
- 6: Erstes Seil
- 7: Erstes Verbindungselement
- 8: Zweites Seil
- 9: Zweites Verbindungselement
- 10: Verschlußeinrichtung
- 11: Erster Mantel
- 12: Zweiter Mantel
- 13: Anschlußstück

## Patentansprüche

1. Anschlußeinrichtung (1) für die Verbindung eines ersten Seilzugs (3) mit einem zweiten Seilzug (2) im Bereich eines Drehgestells eines Schienenfahrzeugs, **dadurch gekennzeichnet, dass** drehgestellseitig ein Anschlußkasten (4) mit einem offenbaren Deckel (5) angeordnet ist, und das ein erstes Seil (6) des ersten Seilzugs (3) im Inneren des Anschlußkastens (4) mit einem ersten Verbindungselement (7) fest verbunden ist, und
ein zweites Seil (8) des zweiten Seilzugs (2) im Inneren des Anschlußkastens (4) mit einem zweiten Verbindungselement (9) fest verbunden ist, und
das erste Verbindungselement (7) und das zweite Verbindungslement (9) mittels einer formschlüssigen Verschlußeinrichtung (10) lösbar verbunden sind, und der Deckel (5) in geschlossener Position ein mit einem Mantel (11) des ersten Seilzugs (3) verbundenes Anschlußstück (13) formschlüssig umfasst.

2. Anschlußeinrichtung (1) nach Anspruch 1, **dadurch gekennzeichnet, dass** der erste Seilzug (3) oder der zweite Seilzug (2) als Doppelseilzug mit zwei Seilen und zwei Mänteln ausgeführt ist.

3. Anschlußeinrichtung (1) nach einem der Ansprüche 1 oder 2, **dadurch gekennzeichnet, dass** der erste Seilzug (3) oder der zweite Seilzug (2) als Bowdenzug nach Art des Flexballzuges ausgeführt ist.

4. Anschlußeinrichtung (1) nach einem der Ansprüche 1 bis 3, **dadurch gekennzeichnet, dass** der Deckel (5) als Klappe mit einer Drehachse ausgeführt ist.

5. Anschlußeinrichtung (1) nach einem der Ansprüche 1 bis 4, **dadurch gekennzeichnet, dass** die Verschlußeinrichtung (10) als Bolzen mit einer Bajonettfixierung ausgeführt ist.

6. Anschlußeinrichtung (1) nach einem der Ansprüche 1 bis 5, **dadurch gekennzeichnet, dass** der erste Seilzug (3) die mechanische Betätigungskraft für eine Feststellbremse von einer wagenkastenseitigen Betätigungseinrichtung übermittelt und der zweite Seilzug (2) diese mechanische Betätigungskraft an eine Bremseinrichtung eines Drehgestells übermittelt.

7. Anschlußeinrichtung (1) nach einem der Ansprüche 1 bis 6, **dadurch gekennzeichnet, dass** der zweite Seilzug (2) aus zwei Bowdenzügen gebildet ist, wobei je ein Seilzug die mechanische Betätigungskraft zu einer Bremseinrichtung einer Achse des Drehgestells übermittelt.

8. Schienenfahrzeug, umfassend eine Anschlußeinrichtung nach einem der Ansprüche 1 bis 7.

9. Schienenfahrzeug nach Anspruch 8, **dadurch gekennzeichnet, dass** die Drehgestelle austauschbar sind, wobei Drehgestelle gemäß der europäischen Normalspur oder der russischen Breitspur an dem Schienenfahrzeug befestigbar sind.

## Claims

1. Connector device (1) for the connection of a first control cable (3) to a second control cable (2) in the region of a bogie of a rail vehicle, **characterised in that** a connection box (4) with an openable cover (5) is arranged on the bogie side, and that a first cable (6) of the first control cable (3) is permanently connected in the interior of the connection box (4) to a first connection element (7), and
a second cable (8) of the second control cable (2) is permanently connected in the interior of the connection box (4) to a second connection element (9), and
the first connecting element (7) and the second connecting element (9) are removably connected by means of a form-fit locking device (10), and
the cover (5), in the closed position, comprises in a form-fit manner a connector piece (13) connected to a casing (11) of the first control cable (3).

2. Connector device (1) according to claim 1, **characterised in that** the first control cable (3) or the second control cable (2) is designed as a double control cable with two cables and two casings.

3. Connector device (1) according to one of claims 1 or 2, **characterised in that** the first control cable (3) or the second control cable (2) is designed as a Flexball-type Bowden cable.

4. Connector device (1) according to one of claims 1 to 3, **characterised in that** the cover (5) is designed as a flap with an axis of rotation.

5. Connector device (1) according to one of claims 1 to 4, **characterised in that** the locking device (10) is designed as a bolt with a bayonet fitting.

6. Connector device (1) according to one of claims 1 to 5, **characterised in that** the first control cable (3) transmits the mechanical actuating force for a parking brake from an actuation device on the carriage body side and the second control cable (2) transmits said mechanical actuating force to a brake device of a bogie.

7. Connector device (1) according to one of claims 1 to 6, **characterised in that** the second control cable (2) is formed of two Bowden cables, wherein each control cable transmits the mechanical actuating force to a brake device of an axle of the bogie.

8. Rail vehicle, comprising a connector device according to one of claims 1 to 7.

9. Rail vehicle according to claim 8, **characterised in that** the bogies can be exchanged, wherein bogies according to the European standard gauge and the Russian wide gauge can be attached to the rail vehicle.

## Revendications

1. Dispositif de raccordement (1) pour la liaison d'un premier câble de transmission (3) avec un deuxième câble de transmission (2) dans la zone d'un bogie d'un véhicule ferroviaire, **caractérisé en ce qu'**une boîte de dérivation (4) avec un couvercle ouvrable (5) est disposée côté bogie, et **en ce qu'**un premier câble (6) du premier câble de transmission (3) est relié de manière fixe à l'intérieur de la boîte de dérivation (4) avec un premier élément de liaison (7), et un deuxième câble (8) du deuxième câble de transmission (2) est relié de manière fixe à l'intérieur de la boîte de dérivation (4) avec un deuxième élément de liaison (9), et le premier élément de liaison (7) et le deuxième élément de liaison (9) sont reliés de manière amovible via un dispositif de verrouillage à complémentarité de formes (10), et le couvercle (5) englobe en position fermée par complémentarité de formes une pièce de raccordement (13) reliée à un manteau (11) du premier câble de transmission (3).

2. Dispositif de raccordement (1) selon la revendication 1, **caractérisé en ce que** le premier câble de transmission (3) ou le deuxième câble de transmission (2) est exécuté sous forme de câble de transmission double avec deux câbles et deux manteaux.

3. Dispositif de raccordement (1) selon l'une des revendications 1 ou 2, **caractérisé en ce que** le premier câble de transmission (3) ou le deuxième câble de transmission (2) est exécuté sous forme de commande Bowden à la manière d'une commande Flexball.

4. Dispositif de raccordement (1) selon l'une des revendications 1 à 3, **caractérisé en ce que** le couvercle (5) est exécuté sous forme de clapet avec un axe de rotation.

5. Dispositif de raccordement (1) selon l'une des revendications 1 à 4, **caractérisé en ce que** le dispositif de verrouillage (10) est exécuté sous forme de boulon avec une fixation à baïonnette.

6. Dispositif de raccordement (1) selon l'une des revendications 1 à 5, **caractérisé en ce que** le premier câble de transmission (3) transmet la force d'actionnement mécanique pour un frein d'immobilisation d'un dispositif situé côté caisse de voiture et le deuxième câble de transmission (2) transmet cette force d'actionnement mécanique à un dispositif de freinage d'un bogie.

7. Dispositif de raccordement (1) selon l'une des revendications 1 à 6, **caractérisé en ce que** le deuxième câble de transmission (2) est constitué par deux commandes Bowden, chaque câble de transmission transmettant la force d'actionnement mécanique à un dispositif de freinage d'un axe du bogie.

8. Véhicule ferroviaire comprenant un dispositif de raccordement selon l'une des revendications 1 à 7.

9. Véhicule ferroviaire selon la revendication 8, **caractérisé en ce que** les bogies sont échangeables, les bogies pouvant être fixés au véhicule ferroviaire conformément à la largeur de voie normale européenne ou à la largeur de voie russe.
